## Europäisches Patentamt

## European Patent Office

## Office européen des brevets

(19)

(11) Veröffentlichungsnummer: **0 091 607**
**B1**

(12) # EUROPÄISCHE PATENTSCHRIFT

(45) Veröffentlichungstag der Patentschrift:
**03.06.87**

(51) Int. Cl.⁴: **F 16 P 3/16, E 05 F 15/00**

(21) Anmeldenummer: **83103144.8**

(22) Anmeldetag: **30.03.83**

(54) **Sicherheitseinrichtung an beweglichen Schliessteilen, insbesondere an Schutzklappen von Bearbeitungsmaschinen.**

(30) Priorität: **10.04.82 DE 3213491**

(43) Veröffentlichungstag der Anmeldung:
**19.10.83 Patentblatt 83/42**

(45) Bekanntmachung des Hinweises auf die Patenterteilung:
**03.06.87 Patentblatt 87/23**

(84) Benannte Vertragsstaaten:
**DE FR GB IT NL SE**

(56) Entgegenhaltungen:
**DE - A - 1 584 069**
**DE - A - 2 307 375**
**DE - A - 2 637 309**
**FR - A - 1 260 115**
**FR - A - 2 366 432**

(73) Patentinhaber: **Adam Opel Aktiengesellschaft,**
**Bahnhofsplatz 1 Postfach 1560, D-6090 Rüsselsheim**
**(DE)**

(72) Erfinder: **Spreitzer, Hans-Günter, Ing. grad.,**
**Hans-Zöller-Strasse 89, D-6500 Mainz 43 (DE)**

(74) Vertreter: **Baumgarten, Jochem, Dipl.-Ing. et al, C/O**
**Adam Opel Aktiengesellschaft**
**Bahnhofsplatz 1 Postfach 1560, D-6090 Rüsselsheim**
**(DE)**

# Beschreibung

Die Erfindung bezieht sich auf eine Sicherheitseinrichtung an beweglichen Schliessteilen, insbesondere an Schutzklappen von Bearbeitungsmaschinen, vornehmlich für die Fertigung von Karosserieteilen von Kraftfahrzeugen, mit einem an der freien Kante des Schliessteils angeordneten, mit Luft gefüllten Schlauch (Kontaktleiste) als Sensor, der als Druckwellengeber arbeitet und eine Sperr- und/oder Rückfahrvorrichtung für die Schliessteilbewegung ansteuert, und mit einem auf einem ersten Teilstück des Verfahrweges des beweglichen Schliessteils angeordneten Prüfelement, derart, dass der Sensor (Kontaktleiste) zu Beginn des Schliesshubes (innerhalb der Prüfstrecke) des beweglichen Schliessteils mit dem Prüfelement in Berührung kommt und dabei einen ersten Druckimpuls erzeugt, wobei der Antrieb des beweglichen Schliessteils so gesteuert ist, dass bei Ausbleiben des ersten Druckimpulses auf dem ersten Teilstück (Prüfstrecke) des Schliesshubes eine Unterbrechung der Schliessbewegung des beweglichen Schliessteils erfolgt, und wobei das bewegliche Schliessteil durch ein Druckmittel, vorzugsweise Druckluft, über ein von einer elektrischen Steuerung betätigtes Ventil angetrieben ist und der vom Sensor beim Auftreffen auf ein mechanisches Hindernis erzeugte Druckimpuls zur Betätigung eines mit der Steuerung in elektrischer Wirkverbindung stehenden Druckwellenschalters dient.

Sicherheitseinrichtungen an beweglichen Schliessteilen sind durch die DE-A 2 127 207 und 2 839 498 sowie die DE-A 2 643 505, 2 658 660 und 2 712 173 bekannt geworden. Bei den «beweglichen Schliessteilen», für die die Sicherheitseinrichtungen gemäss den vorstehend genannten Druckschriften vorgesehen sind, handelt es sich jeweils um Türen, z.B. an Fahrzeugen, bzw. Tore, wobei diese Türen oder Tore jeweils automatisch schliessen und öffnen. Durch die Sicherheitseinrichtungen der in Rede stehenden Art soll das unbeabsichtigte Einklemmen von Gegenständen oder Personen zwischen den sich schliessenden Tür- oder Torflügeln verhindert werden. Die Sicherheitseinrichtungen arbeiten hierbei jeweils so, dass bei beginnendem Einklemmvorgang von dem Sensor (pneumatischer Druckwellengeber) ein Druckimpuls an eine Steuereinrichtung abgegeben wird, die daraufhin das sofortige Wiederöffnen der Tür bzw. des Tores bewirkt.

Es ist des weiteren bekannt, mit einer derartigen Sicherheitseinrichtung versehene bewegliche Schliessteile an Werkzeugmaschinen, z.B. zur Blechbearbeitung, vorzusehen. Die beweglichen Schliessteile sind in diesem Fall zumeist als Schutzklappen ausgebildet und haben den Zweck, einen Zugriff der Bedienungsperson zu dem Werkstück während der Bearbeitung desselben zu verhindern, um eine mögliche Verletzung der Bedienungsperson zu vermeiden. Nachdem die Bedienungsperson das Produktionsteil (Werkstück) in die Bearbeitungsmaschine eingelegt hat, fährt beim Betätigen eines einfachen Startknopfes die Schutzklappe in ihre Schliessstellung, und der eigentliche Arbeitszyklus der Bearbeitungsmaschine wird eingeleitet. Am Ende der Arbeitsfolge wird die Schutzklappe wieder in die Ausgangsstellung zurückgefahren. Um Verletzungen durch die herabfahrende Schutzklappe selbst zu vermeiden, besitzt diese an ihrer Unterkante einen als Druckwellengeber arbeitenden Sensor, der im Falle des Einklemmens das erforderliche pneumatische Signal zum Ingangsetzen der Sicherzeitseinrichtung liefert. Die Schutzklappe wird in einem solchen Fall sofort wieder nach oben zurückgefahren.

Die Probleme derartiger Sicherheitseinrichtungen setzen dann ein, wenn der Druckwellengeber (Sensor) defekt ist und den als Stoppsignal für die Schliessbewegung der Tür bzw. Schutzklappe erforderliche Druckwellenimpuls nicht zu liefern vermag. In den oben zum Stand der Technik angegebenen Druckschriften wird zwar darauf hingewiesen, dass es auf die Funktionssicherheit der Unfallverhütungsmassnahmen, d.h. das einwandfreie Funktionieren der geschilderten Sicherheitseinrichtung, entscheidend ankommt. Geeignete Massnahmen zur Lösung der Problematik sind dort aber nicht angegeben.

Die Tatsache, dass es, wie gesagt, bei vielen seitherigen automatischen Schutzeinrichtungen (Schutzklappe mit als Druckwellengeber ausgebildetem Sensor) nicht auszuschliessen war, dass bei einem Störfall von der Schutzeinrichtung selbst eine Gefahr ausging, wobei gerade in der Autoindustrie im Karosserie-Produktionsbereich ein solcher Störfall durch scharfkantige Blechteile sehr oft eintreten kann, führte bei Produktionsanlagen in der Regel zur Ablehnung derartiger automatischer Schutzeinrichtungen durch die Abteilung Arbeitssicherheit.

Statt dessen wurden an den in Frage kommenden Bearbeitungsmaschinen in den meisten Fällen handbediente Schutzklappen angebaut. Das Bedienungspersonal war hierdurch auf Grund der meist erheblichen Abmessungen und Gewichte der Schutzklappen sehr stark belastet.

Durch die DE-A 2 637 309 ist nun eine Sicherheitseinrichtung der eingangs bezeichneten Art bekannt geworden, bei der das Schliessteil (in diesem Fall ein Tor) einen mit Luft gefüllten Schlauch trägt und eine Prüfung durch Deformierung des Schlauches während des ersten Teils der Schliessbewegung durchgeführt wird, um das Tor wieder zu öffnen, wenn die Steuereinrichtung nicht anspricht.

Aufgabe der vorliegenden Erfindung ist es, eine automatisch arbeitende Sicherheitseinrichtung der eingangs genannten Art durch besonders einfache Mittel so auszugestalten, dass ein sofortiger Stopp und/oder die Rückstellung des beweglichen Schliessteils bewirkt wird, wenn der Druckwellengeber (Sensor) aus irgendeinem Grunde defekt werden sollte.

Gemäss der Erfindung wird das Problem dadurch gelöst, dass die Steuerung mit einem Grenztaster in elektrischer Wirkverbindung steht, der im Bereich der Prüfstrecke mit dem beweglichen Schliessteil oder einem mit diesem verbundenen Betätigungselement zusammenarbeitet, derart, dass der bei Betätigung des Druckwellenschalters in der Steuerung an sich bewirkte Umsteuerungseffekt (im Sinne einer Umsteuerung des Schliessteilantriebes) durch den Grenztaster im Bereich der Prüfstrecke wieder aufgehoben wird.

Durch das erfindungsgemäss vorgesehene mechanische Prüfelement, welches zweckmässigerweise als eine in Richtung des Sensors (Kontaktleiste) kraftbeaufschlagte Prüfrolle ausgebildet ist, wird dem beweglichen Schliessteil, z.B. einer nach unten fahrenden Schutzklappe einer Blechverarbeitungsmaschine, gewissermassen eine Schikane in den Weg gestellt, die nun ihrerseits prüft, ob der Druckwellengeber funktioniert. Eine Schutzklappe mit defektem Sensor (Druckwellengeber) führt somit keine Schliessbewegung aus. Die durch die Erfindung realisierte doppelte Sicherheit ermöglicht vorteilhaft die Anwendung derartiger automatisch arbeitender Schutzklappen an Werkzeugmaschinen beliebiger Art, insbesondere auch an Blechbearbeitungsmaschinen im Automobilbau, ohne dass eine Verletzungsgefahr für das Bedienungspersonal mehr befürchtet zu werden braucht.

Selbstverständlich ist die Erfindung aber darüber hinaus ebensogut auch bei allen übrigen denkbaren Sicherheitseinrichtungen anwendbar, bei denen Personen oder Gegenstände vor einem Einklemmen durch bewegliche Schliessteile (z.B. automatisch schliessende Türen oder Tore und dergleichen) geschützt werden müssen.

Nach einer bevorzugten Ausführungsform der Erfindung wird vorgeschlagen, dass der Grenztaster ein rollenförmiges Tastelement aufweist, welches mit einer an dem Schliessteil befestigten Betätigungsschiene zusammenwirkt, deren wirksame Länge der Länge der Prüfstrecke entspricht. Das rollenförmige Tastelement kann hierbei vorteilhafterweise auf der Betätigungsschiene abrollen, während die Schutzklappe ihre Abwärtsbewegung durchführt.

Die Verarbeitung des durch das mechanische Prüfelement verursachten ersten Druckwellenimpulses durch das Steuersystem des Schliessteilantriebes lässt sich denkbar leicht praktisch verwirklichen. Zum Beispiel kann der Antrieb des beweglichen Schliessteils innerhalb der Prüfstrecke, d.h. zu Beginn des Schliesshubes, über den Haltestromkreis eines Relais so gesteuert sein, dass im Falle der Erzeugung des ersten Druckimpulses durch den als Druckwellengeber ausgebildeten Sensor (Kontaktleiste) die in Schliessrichtung gerichtete Bewegung des Schliessteils nicht unterbrochen wird.

Die durch Anordnung und Ausbildung des mechanischen Prüfelements bestimmte Prüfstrecke beträgt zweckmässigerweise 50 mm oder etwa 50 mm. Die Steuerung des Antriebes des beweglichen Schliessteils sollte derart konzipiert sein, dass im Anschluss an die Unterbrechung der Schliessbewegung bei Ausbleiben des ersten Druckimpulses eine Rückstellung des beweglichen Schliessteils in seine Ausgangslage erfolgt.

In der Zeichnung sind Ausführungsbeispiele der Erfindung dargestellt, und zwar zeigt:

Fig. 1 – in perspektivischer Teilansicht – eine Schutzklappenanordnung für eine Bearbeitungsmaschine, z.B. für Karosserieteile von Kraftfahrzeugen,

Fig. 2 das als kraftbeaufschlagte Prüfrolle ausgebildete mechanische Prüfelement nach Fig. 1, in gegenüber Fig. 1 vergrösserter Darstellung,

Fig. 3 eine Schutzklappenanordnung entsprechend Fig. 1, in Vorderansicht (schematisch),

Fig. 4 eine Seitenansicht der Schutzklappenanordnung nach Fig. 3, zusammen mit einem Blockschaltbild des Schutzklappenantriebes und dessen Steuerung und

Fig. 5 einen detaillierten Schaltplan für die in Fig. 4 lediglich als Block schematisch dargestellte Steuerung des Schutzklappenantriebes.

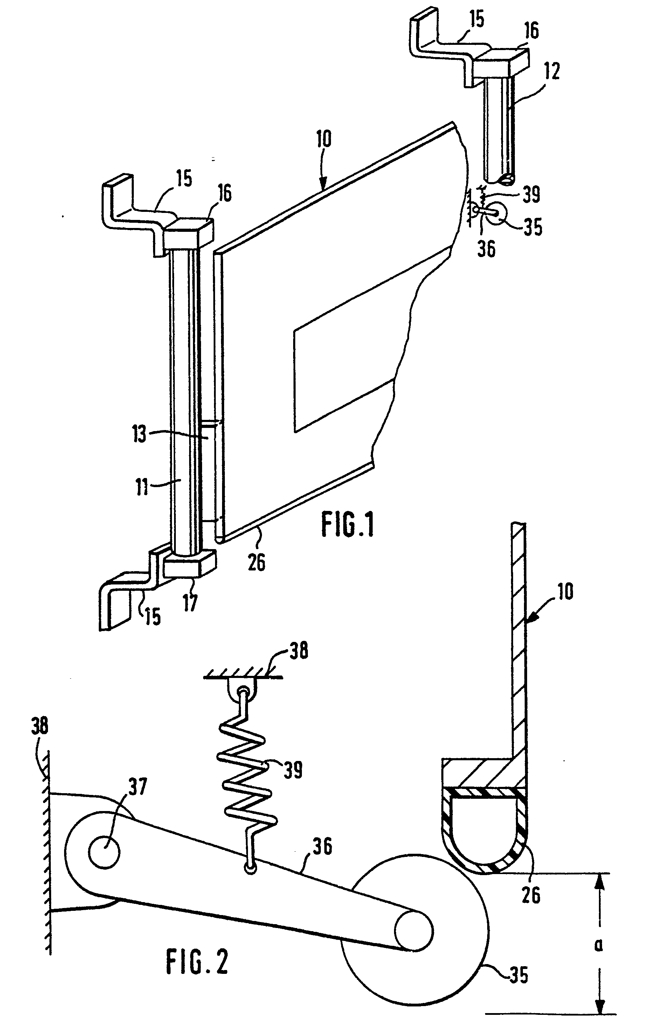

Bei der in Fig. 1 bis 4 gezeigten Ausführungsform ist das bewegliche Schliessteil eine insgesamt mit 10 bezeichnete Schutzklappe, die – z.B. an Maschinen zur Blechbearbeitung in der Automobilindustrie – die Bedienungsperson vor möglichen Verletzungen schützen soll. Beidseitig der Schutzklappe 10 sind Pneumatikzylinder 11, 12 angeordnet, in deren Innerem jeweils ein druckluftbetätigter Kolben (nicht gezeigt), der keine Kolbenstange besitzt, auf- und abbewegbar ist.

Durch derartige, im Handel fertigbeziehbare Pneumatikzylinder können aufwendige Führungen für die Schutzklappe 10 eingespart werden. Hierdurch lassen sich insgesamt die Herstellungskosten für die Schutzvorrichtung niedrig halten.

Die Kolben der Pneumatikzylinder 11, 12 greifen jeweils durch ein Befestigungsteil 13 bzw. 14 an der Schutzklappe 10 an. Durch Winkeleisen 15 (Fig. 1) sind die Pneumatikzylinder 11, 12, und damit auch die Schutzklappe 10, an einem hierfür geeigneten Teil der Bearbeitungsmaschine, z.B. dem Maschinenrahmen (nicht gezeigt) gehalten.

Die Druckluftzuführung zu den Pneumatikzylindern 11, 12 erfolgt jeweils an den Enden 16, 17 derselben. Ein hierfür vorgesehenes Druckleitungssystem ist mit 18, 19 bezeichnet. Es wird – wie durch einen Pfeil 20 angedeutet – von einer geeigneten Druckluftquelle (nicht gezeigt) gespeist. Der mit 18 bezifferte Strang des Druckleitungssystems führt zu den oberen Enden 16 der Pneumatikzylinder 11, 12 und bewirkt eine Abwärtsbewegung der Kolben bzw. der mit diesen verbundenen Schutzklappe 10. Durch den zu den unteren Enden 17 der Pneumatikzylinder 11, 12 führenden Leitungsstrang 19 wird entsprechend eine Aufwärtsbewegung der Kolben und damit auch der Schutzklappe 10 bewirkt.

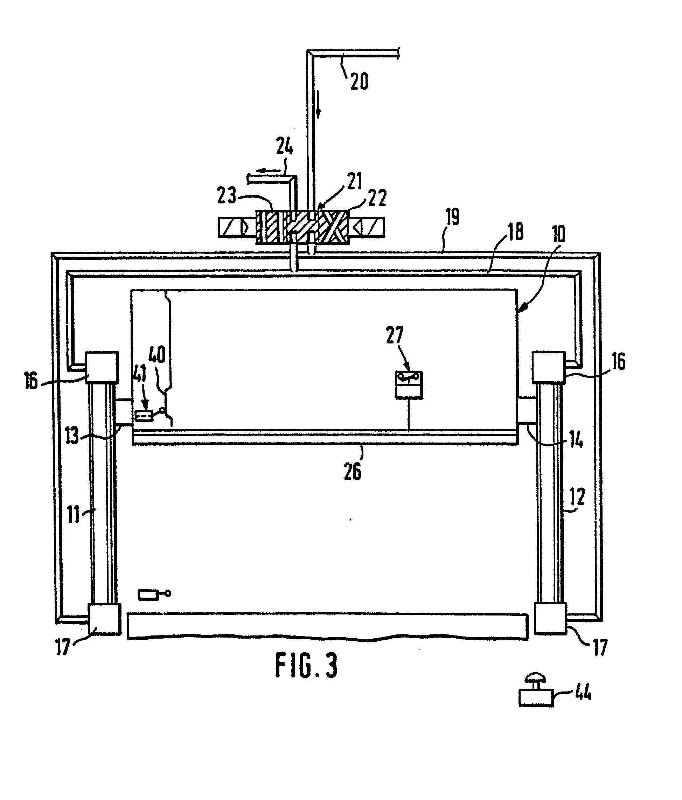

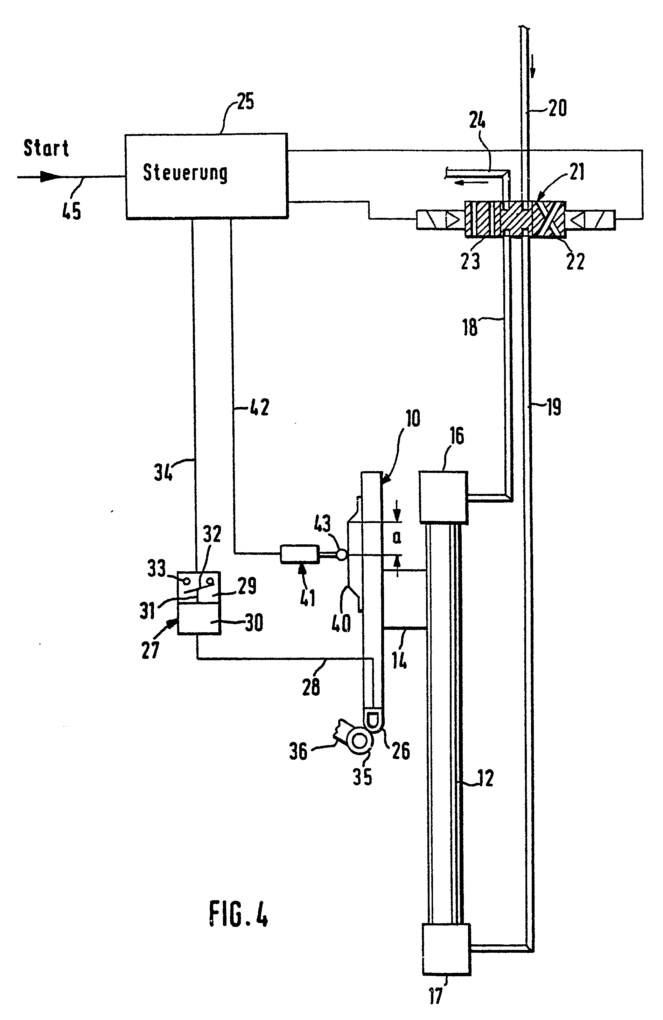

Zwischen die Druckluftquelle (Pfeil 20) und die Leitungsstränge 18, 19 ist ein in Fig. 3 und 4 schematisch angedeutetes und insgesamt mit 21 beziffertes Druckluftventil geschaltet. Bei der in Fig. 3 und 4 gezeigten Position befindet sich das Druckluftventil 21 jeweils in Sperrstellung, d.h. es kann keine Druckluft in das Leistungssystem 18, 19 gelangen. Das Druckluftventil 21 besitzt jedoch darüber hinaus noch zwei mögliche Betriebsstellungen, die in Fig. 3 und 4 durch Kästchen 22, 23 symbolisiert sind. Bei Betriebsstellung 22 gelangt Druckluft in den Litungsstrang 18, und der Leitungsstrang 19 ist entlüftet (Pfeil 24), so dass die Schutzklappe 10 in Abwärtsrichtung bewegt wird. In der mit 23 bezeichneten anderen Betriebsstellung gelangt dagegen Druckluft in den Leitungsstrang 19, während nun der Leitungsstrang 18 entlüftet ist. Diese Ventilstellung ist erforderlich, um eine Aufwärtsbewegung der Schutzklappe zu bewirken.

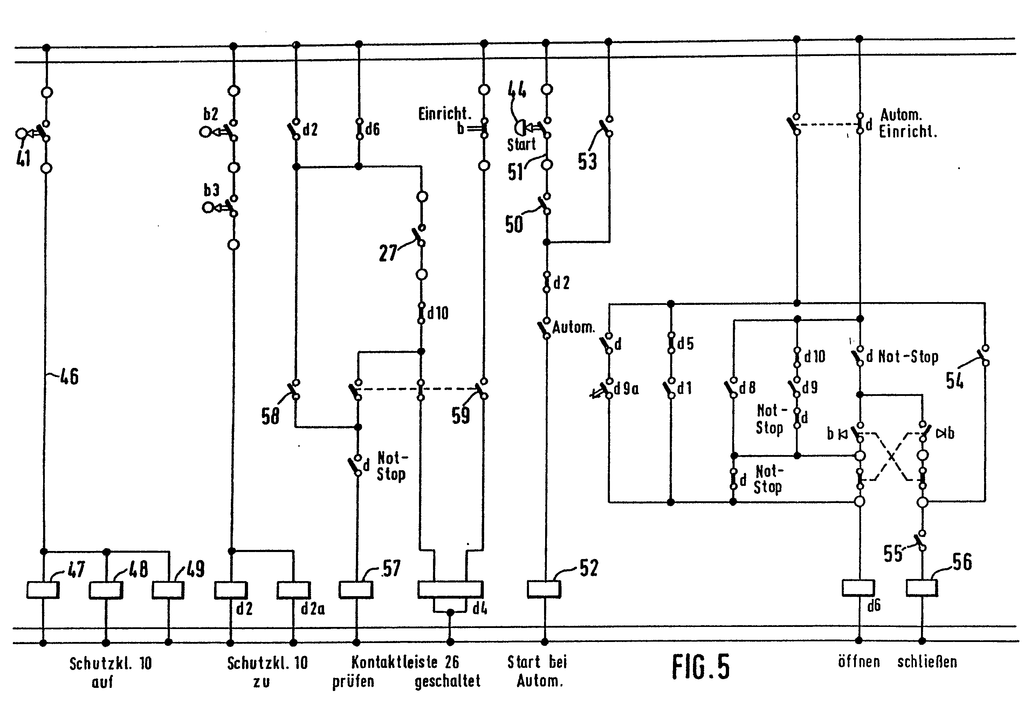

Zur Betätigung des Druckluftventils 21 dient eine in Fig. 4 vereinfacht als Rechteckblock dargestellte und insgesamt mit 25 bezeichnete elektrische Steuerung (vgl. hierzu auch Fig. 5 und Ausführungen weiter unten).

Wie Fig. 1 bis 4 weiterhin erkennen lassen, ist an der unteren Kante der Schutzklappe 10 eine Kontaktleiste 26 angeordnet, die als geschlossener luftgefüllter Schlauch ausgebildet ist. In das in sich geschlossene Luftsystem der Kontaktleiste 26 ist ein Druckwellenschalter 27 mit einbezogen (vgl. Fig. 4). Die Verbindung zwischen den Teilen 26, 27 wird hierbei durch eine Leitung 28 hergestellt. Der Druckwellenschalter 27 besitzt eine durch eine Membran 29 abgeschlossene Luftkammer 30, in die die Leitung 28 einmündet. An der Membran 29 ist ein Schaltelement 31 befestigt, welches an einem elektrischen Schalter 32 angreift. Durch Kontakte 33 und eine elektrische Leitung 34 steht der Druckwellenschalter 27 mit der Steuerung 25 in elektrischer Wirkverbindung.

Das Kontaktleiste 26, Druckwellenschalter 27 und Steuerung 25 umfassende System arbeitet (normalerweise) wie folgt. Trifft die Schutzklappe 10 bei ihrer Abwärtsbewegung mit der Kontaktleiste 26 auf ein Hindernis (z. B. ein Hand der Bedienungsperson), so erzeugt die Kontaktleiste 26 einen Druckimpuls, der durch die Leitung 28 in die Kammer 30 des Druckwellenschalters 27 weitergeleitet wird. Durch die sich infolgedessen nach oben ausdehnende Membran 29 schliesst der elektrische Schalter 32, und die Steuerung 25 erhält hierdurch ein Signal. Das Signal wird in der Steuerung 25 so verarbeitet bzw. wirkt sich so aus, dass das Druckluftventil 21 von der Position 22 (= Abwärtshub der Schutzklappe 10) auf die Position 23 (= Aufwärtshub der Schutzklappe 10) umgeschaltet wird. Die Schutzklappe 10 bewegt sich daraufhin nach oben und vermeidet so eine mögliche Verletzung der Bedienungsperson.

Nun ist aber eine zusätzliche Sicherungseinrichtung vorgesehen, die zu Beginn eines jeden Abwärtshubes der Schutzklappe 10 zunächst einmal prüft, ob der im Vorstehenden beschriebene Schutzklappen – Steuerungsmechanismus überhaupt in Funktionsbereitschaft ist. Zu diesem Zweck ist unterhalb der Kontaktleiste 26 (bezogen auf deren obere Endstellung) eine Prüfrolle 35 als mechanisches Prüfelement angeordnet. Die Prüfrolle 35 ist am freien Ende eines Hebelarmes 36 gelagert, der bei 37 am Maschinenrahmen oder einem anderen geeigneten ortsfesten Teil 38 angelenkt ist. Hebelarm 36 und Prüfrolle 35 werden – wie insbesondere aus Fig. 2 ersichtlich ist – durch eine Zugfeder 39 in ihrer Bereitschaftsstellung gehalten.

Die Prüfrolle 35 ist so angeordnet, dass die Kontaktleiste 26 mit ihr während eines ersten Teilstückes des Abwärtshubes der Schutzklappe 10, im folgenden «Prüfstrecke» genannt, in Berührung kommt. Die Prüfstrecke ist in Fig. 2 durch einen mit a bezeichneten Doppelpfeil veranschaulicht und beträgt zweckmässigerweise etwa 50 mm.

Aus Fig. 3 und 4 geht weiterhin hervor, dass an der Schutzklappe 10 eine Betätigungsschiene 40 befestigt ist, die mit einem Grenztaster 41 kooperiert. Der Grenztaster 41 steht durch eine elektrische Leitung 42 mit der Steuerung 25 in Wirkverbindung. Er besitzt ein rollenförmiges Tastelement 43, welches auf der Betätigungsschiene 40 abrollt, während die Schutzklappe 10 ihre Abwärtsbewegung durchführt. Die wirksame Länge der Betätigungschiene 40 entspricht hierbei wiederum dem Betrag a der Prüfstrecke (vgl. Fig. 2). Solange das rollenförmige Tastelement 43 auf der Betätigungsschiene 40 abrollt, ist der Grenztaster 41 aktiviert. Das von ihm in die Steuerung 25 eingegebene Signal bewirkt, dass der bei Betätigung des Druckwellenschalters 27 in der Steuerung 25 an sich bewirkte Umsteuerungseffekt (im Sinne einer Umsteuerung des Schliessteilantriebes 16–21) durch den Grenztaster 41 im Bereich der Prüfstrecke a wieder aufgehoben wird.

Im einzelnen arbeitet die im Vorstehenden beschriebene Funktionskontrolle der Sicherheitseinrichtung für die Schutzklappe 10 wie folgt.

Nach automatischer Betätigung eines Starters 44 (Fig. 3), z.B. durch Fusskontakt der in einen festgelegten Grenzbereich um die Bearbeitungsmaschine herum eintretenden Bedienungsperson, gelangt ein entsprechendes Startsignal (Pfeil 45 in Fig. 4) in die Steuerung 25. Die Steuerung 25 wird hierdurch veranlasst, das Druckluftventil 21 so zu betätigen (Pos. 22), dass Druckluft in den Leitungsstrang 18 gelangt und demgemäss die Schutzklappe 10 ihre Abwärtsbewegung beginnt. Hierbei wird in oben beschriebener Weise der Druckwellenschalter 27 durch die Prüfrolle 35 betätigt. Das vom Druckwellenschalter 27 daraufhin in die Steuerung 25 eingegebene Signal wird – da der Grenztaster 41 gleichzeitig durch die Betätigungsschiene 40 aktiviert ist – von der Steuerung 25 dahingehend erkannt, dass der Sicherheitsmechanismus der als Sensor wirkenden Kontaktleiste 26 zusammen mit dem Druckwellenschalter 27 funktionstüchtig ist. Das Signal wird demgemäss von der Steuerung 25 so verarbeitet, dass die Schutzklappe 10 ihre Abwrätsbewegung fortsetzt. Sollte jedoch dieses erste, innerhalb der Prüfstrecke a durch die Teile 26, 35 und 27 zu erzeugende Signal aus irgend einem Grunde ausbleiben, so wird die Steuerung 25 durch den aktivierten Grenztaster 41 veranlasst, den Schutzklappenantrieb 16 bis 21 umzusteuern (Pos. 23 des Druckluftventils 21). Die Schutzklappe 10 wird dadurch in ihrer Abwärtsbewegung gestoppt und wieder nach oben in ihre Ausgangslage (Fig. 3 und 4) zurückgefahren.

Im Normalfall wird sich aber innerhalb der Prüfstrecke a die Funktionsfähigkeit der Elemente 26, 35 und 27 bestätigen, so dass die Schutzklappe 10 ihre Abwärtsbewegung fortsetzen kann. Am Ende der etwa 50 mm betragenden Prüfstrecke a kommen dann gleichzeitig Prüfrolle 35 und Kontaktleiste 26 sowie Grenztaster 41, 43 und Betätigungsschiene 40 ausser Eingriff. Der Grenztaster 41 steht von da an nicht mehr in elektrischer Wirkverbindung mit der Steuerung 25. Trifft nun die Kontaktleiste 26 im weiteren Verlauf der Abwärtsbewegung der Schutzklappe 10 auf ein natürliches Hindernis, z.B. die Hand der Bedienungsperson, so wird durch dieses Hindernis an der als Sensor arbeitenden Kontaktleiste 26 erneut ein Druckimpuls erzeugt, der durch den Druckwellenschalter 27 in oben beschriebener Weise in ein elektrisches Signal für die Steuerung 25 umgewandelt wird. Dieses Signal wird nun – bei Fehlen eines gleichzeitigen Signals des Grenztasters 41 – von der Steuerung so verarbeitet, dass der Schutzklappenantrieb 16 bis 21 im Sinne der Einleitung einer Aufwärtsbewegung der Schutzklappe 10 umgesteuert wird (Pos. 23 des Druckluftventils 21).

Die Funktionsweise der Steuerung 25 sei nachstehend anhand des aus Fig. 5 ersichtlichen Schaltplanes noch näher erläutert.

Die Ausgangslage der Vorrichtung ist gekennzeichnet durch eine geöffnete Schutzklappe 10 (oberste Schutzklappenstellung gemäss Fig. 3 und 4) und den betätigten Grenztaster 41. Ein hierdurch geschlossener Stromkreis 46 bewirkt das Anziehen von Relais 47, 48 und 49. Ein dem Relais 47 zugeordneter Schaltkontakt 50 im Starterstromkreis 51 wird hierdurch geschlossen.

Der Start wird nun – wie oben beschrieben – durch (automatische) Betätigung des Startknopfes 44 eingeleitet. Der Starterstromkreis 51 ist nun geschlossen und bewirkt das Anziehen eines Relais 52 sowie die daraufhin erfolgende Schliessung eines Schaltkontaktes 53. Über Schaltkontakte 54 und 55 wird hierdurch ein Relais 56 betätigt. Die Schutzklappe 10 beginnt ihre Abwärtsbewegung.

Beim Durchfahren der Prüfstrecke a wird bei intakter Kontaktleiste 26 ein Schaltimpuls von dem Druckwellenschalter 27 abgegeben. Dieser bringt ein Relais 57 zum Anziehen, welches sich durch seinen eigenen Schaltkontakt 58 selbst hält. Wird nun am Ende der Prüfstrecke a der Grenztaster 41 frei, und es fehlt der erste Druckwellenschalterimpuls, dann hat das Relais 57 nicht angezogen und der Kontakt 59 in der Notstoppkette ist nicht geschlossen. Der Kontakt 59 unterbricht die Notstoppkette durch Abfallen des Relais 48. Das Druckluftventil 21 wird umgesteuert, und die Schutzklappe 10 fährt in ihre obere Ausgangsstellung zurück.

Wird dagegen der erste Druckwellenschalterimpuls durch die Teile 26, 35 und 27 innerhalb der Prüfstrecke a ordnungsgemäss ausgelöst, dann hat das Relais 57 angezogen, und die Schutzklappe 10 kann ihre Schliessbewegung zu Ende führen. Nach Beendigung des Arbeitszyklus' werden dann die oben angegebenen Startbedingungen wieder aufgehoben.

**Patentansprüche**

1. Sicherheitseinrichtung an beweglichen Schliessteilen, insbesondere an Schutzklappen von Bearbeitungsmaschinen, vornehmlich für die Fertigung von Karosserieteilen von Kraftfahrzeugen, mit einem an der freien Kante des Schliessteils (10) angeordneten, mit Luft gefüllten Schlauch (Kontaktleiste (26)) als Sensor, der als Druckwellengeber arbeitet und eine Sperr- und/oder Rückfahrvorrichtung (11–24) für die Schliessteilbewegung ansteuert, und mit einem auf einem ersten Teilstück (a) des Verfahrweges des beweglichen Schliessteils (10) angeordneten Prüfelement (35), derart, dass der Sensor (Kontaktleiste (26)) zu Beginn des Schliesshubes (innerhalb der Prüfstrecke a) des beweglichen Schliessteils (10) mit dem Prüfelement (35) in Berührung kommt und dabei einen ersten Druckimpuls erzeugt, wobei der Antrieb (16–21) des beweglichen Schliessteils (10) so gesteuert ist, dass bei Ausbleiben des ersten Druckimpulses auf dem ersten Teilstück (Prüfstrecke a) des Schliesshubes eine Unterbrechung der Schliessbewegung des beweglichen Schliessteils (10) erfolgt, und wobei das bewegliche Schliessteil (10) durch ein Druckmittel, vorzugsweise Druckluft, über ein von einer elektrischen Steuerung (25) betätigtes Ventil (21) angetrieben ist und der vom Sensor (26) beim Auftreffen auf ein mechanisches Hindernis erzeugte Druckimpuls zur Betätigung eines mit der Steuerung (25) in elektrischer Wirkverbindung stehenden Druckwellenschalters (27) dient, dadurch gekennzeichnet, dass die Steuerung (25) mit einem Grenztaster (41) in elektrischer Wirkverbindung (42) steht, der im Bereich der Prüfstrecke (a) mit dem beweglichen Schliessteil (10) oder einem mit diesem verbundenen Betätigungselement (40) zusammenarbeitet, derart, dass der bei Betätigung des Druckwellenschalters (27) in der Steuerung (25) an sich bewirkte Umsteuerungseffekt (im Sinne einer Umsteuerung des Schliessteilantriebes (16–21)) durch den Grenztaster (41) im Bereich der Prüfstrecke (a) wieder aufgehoben wird.

2. Sicherheitseinrichtung nach Anspruch 1, dadurch gekennzeichnet, dass der Grenztaster (41) ein rollenförmiges Tastelement (43) aufweist, welches mit einer an dem Schliessteil (10) befestigten Betätigungsschiene (40) zusammenwirkt, deren wirksame Länge der Länge der Prüfstrecke (a) entspricht.

3. Sicherheitseinrichtung nach Anspruch 1 oder 2, dadurch gekennzeichnet, dass als mechanisches Prüfelement eine in Richtung des Sensors (Kontaktleiste (26)) kraftbeaufschlagte Prüfrolle (35) dient.

4. Sicherheitseinrichtung nach Anspruch 3, dadurch gekennzeichnet, dass die Prüfrolle (35) durch Federkraft (39) oder ein Gewicht beaufschlagt ist.

5. Sicherheitseinrichtung nach einem oder mehreren der vorstehenden Ansprüche, dadurch gekennzeichnet, dass die durch Anordnung und Ausbildung des mechanischen Prüfelements (35) bestimmte Prüfstrecke (a) 50 mm oder etwa 50 mm beträgt.

**Claims**

1. Safety device on movable closure members, in particular on guard flaps of machine tools, mainly for the manufacture of body panels of motor vehicles, with an air-filled hose (contact strip (26)) disposed at the free edge of the closure member (10), as a sensor which acts as a dynamic pressure source and triggers a device (11–24) for blocking and/or returning the closure member movement, and with a test element (35) disposed on a first section (a) of the stroke of the movable closure member (10), in such a way that at the beginning of the closing stroke (within test section a) of the movable closure member (10), the sensor (contact strip (26)) comes into contact with the test element (35), at the same time producing a first pressure pulse, wherein the drive (16–21) of the movable closure member (10) is controlled in such a way that in the absence of the first pressure pulse on the first section (test section a) of the closing stroke, the closing movement of the movable closure member (10) is interrupted, and wherein the movable closure member (10) is driven by a pressure medium, preferably compressed air, by means of a valve (21) operated by electrical control means (25), and the pressure pulse produced by the sensor (26) upon encountering a mechanical obstacle serves to operate a pressure-wave switch (27) electrically connected to the control means (25), characterised in that the control means (25) is electrically connected to a limit switch (41) (via 42) which in the region of the test section (a) cooperates with the movable closure member (10) or an operating element (40) connected thereto, in such a way that the reversal effect which is obtained as such on operation of the pressure-wave switch (27) in the control means (25) (in the sense of reversal of the closure member drive (16–21)) is cancelled out by the limit switch (41) in the region of the test section (a).

2. Safety device according to claim 1, characterised in that the limit switch (41) comprises a roller-like feeler (43) cooperating with an operating bar (40) which is mounted on the closure member (10) and whose effective length corresponds to the length of the test section (a).

3. Safety device according to claim 1 or 2, characterised in that a test roller (35), to which force is applied in the direction of the sensor (contact strip (26)), serves as the mechanical test element.

4. Safety device according to claim 3, characterised in that spring force (39) or a weight acts upon the test roller (35).

5. Safety device according to one or more of the preceding claims, characterised in that the test section (a), which is determined by the arrangement and design of the mechanical test element (35), amounts to 50 mm or approximately 50 mm.

## Revendications

1. Dispositif de sécurité monté sur des organes d'obturation mobiles, en particulier sur des trappes de protection de machines d'usinage, principalement pour la fabrication de pièces de carrosseries de véhicules automobiles, comprenant, en tant que capteur, un boyau rempli d'air (barrette de contact 26) qui, disposé sur l'arête libre de l'organe d'obturation (10), fait office de générateur d'ondes de pression et active un dispositif de blocage et/ou de mouvement rétrograde (11–24) pour le déplacement de l'organe d'obturation, et un élément de contrôle (35) quie est disposé sur un premier tronçon (a) du trajet de l'organe d'obturation mobile (10) de façon que le capteur (barrette de contact 26) au début de la course de fermeture (sur le tronçon de contrôle a) de l'organe d'obturation mobile (10) vienne au contact de l'élément de contrôle (35) et délivre alors une première impulsion de pression, le système d'entraînement (16–21) de l'organe d'obturatin mobile (10) étant commandé de telle sorte qu'en cas d'absence de la première impulsion de pression sur le premier tronçon (tronçon de contrôle a) de la course de fermeture, il se produise une interruption du mouvement de fermeture de l'organe d'obturation mobile (10) et l'organe d'obturation mobile (10) étant entraîné par un fluide sous pression, de préférence de l'air comprimé, par l'intermédiaire d'une valve (21) actionnée par une commande électrique (25) et l'impulsion de pression, délivrée par le capteur (26) en cas de choc contre un obstacle mécanique, servant à l'actionnement d'un interrupteur pneumatique (27) électriquement raccordé à la commande (25), caractérisé par le fait que la commande (25) est électriquement raccordée par une ligne (42) à un contact de fin de course (41) qui, dans la zone du tronçon de contrôle (a), coopère avec l'organe d'obturation mobile (10) ou avec un élément d'actionnement (40) qui lui est relié de manière que l'effet d'inversion (au sens d'un renversement de marche du système d'entraînement (16–21) de l'organe d'obturation) opérant sur la commande (25) lors de l'actionnement de l'interrupteur pneumatique (27) soit à nouveau supprimé par l'interrupteur fin de course (41) dans la zone du tronçon de contrôle (a).

2. Dispositif de sécurité selon la revendication 1, caractérisé par le fait que le contact de fin de course (41) comporte un palpeur (43) en forme de galet qui coopère avec une barre d'actionnement (40) fixée sur l'organe d'obturation (10) et dont la longueur active correspond à la longueur du tronçon de contrôle (a).

3. Dispositif de sécurité selon la revendication 1 ou 2, caractérisé par le fait que, comme élément de contrôle mécanique, on utilise un galet de contrôle (35) soumis à l'action d'une force dirigée dans le sens du capteur (barrette de contact 26).

4. Dispositif de sécurité selon la revendication 3, caractérisé par le fait que le galet de contrôle (35) est soumis à l'action de la force d'un ressort (39) ou d'un poids.

5. Dispositif de sécurité selon l'une ou plusieurs des revendications précédentes, caractérisé par le fait que le tronçon de contrôle (a) déterminé par l'agencement et la conception de l'élément de contrôle mécanique (35) a une longueur de 50 mm ou d'environ 50 mm.

FIG.1

FIG.2

FIG. 3

FIG.4

FIG.5

Schutzkl. 10 auf    Schutzkl. 10 zu    Kontaktleiste 26 prüfen    Start bei Autom.    öffnen    schließen